# EUROPEAN PATENT SPECIFICATION

(11) **EP 0 601 984 B1**
(45) Date of publication and mention of the grant of the patent: **20.01.1999**
(21) Application number: 93850220.0
(22) Date of filing: 19.11.1993
(51) Int. Cl.: H04Q 1/14

(54) **A method of connecting subscribers to a telephone exchange**
Verfahren zum Verbinden von Teilnehmern an eine Fernsprechvermittlungsanlage
Méthode de raccordement des abonnés à un autocommutateur téléphonique

(30) Priority: 08.12.1992 SE 9203697
(43) Date of publication of application: 15.06.1994
(73) Proprietor: TELEFONAKTIEBOLAGET LM ERICSSON, 126 25 Stockholm (SE)
(72) Inventor: Grut, Peter Josiah Bertrand, SE-115 36 Stockholm (SE)
(74) Representative: Wideberg, Olle Sven

(56) References cited:
- CH-A- 544 468
- ERICSSON REVIEW, vol.60, no.4, December 1983, STOCKHOLM pages 181 - 185 G. BJUREL ET AL.: 'Linjekretsutveckling för AXE 10'

## Description

### TECHNICAL FIELD

The present invention relates to a method of connecting subscribers to a telephone exchange with the intention of spreading the risk of groups of subscribers being disconnected or put out of order when incoming subscriber lines are connected to a cross-connection frame which, in turn, is connected on the station side to the different line switch modules of the exchange, said cross-connection frame being divided into a number of modules where the size of each module corresponds to a line switch module.

### BACKGROUND ART

Subscribers are connected to a telephone exchange through the medium of a so-called cross-connection. Cross-connections have earlier had the following main functions, among other things: Each telephone number has had a special unique position in electromechanical telephone exchanges. When wishing to assign a new number to a subscriber, a jumperwire was drawn or run in the cross-connection. This "unique position" corresponds to the present-day subscriber line circuit (LIC = Line Interface Circuit). In present-day systems, it shall be possible to allocate any number whatsoever to each specific position in the AXE exchange, i.e. LIC. This is referred to as free allocation. Furthermore, it shall be possible to switch-in additional equipment via the cross-connection, and for the cross-connection to function as a "fuse box" so as to protect the electronics in the exchange. The cross-connection may also function as a reserve for alternative routes in the subscriber network, in that the subscriber side has more incoming lines than the lines outgoing to the station side. Thus, if a line on the subscriber side degenerates, an alternative line to the cross-connection can be coupled-in instead.

An example of a telephone exchange with a cross-connection of the above described type is disclosed in document CH-A-544468.

Earlier, it has taken a relatively long time, roughly 2.5 minutes, to draw a pair of wires for each subscriber in a cross-connection, this work being carried out in the field. In a station having 10,000 subscribers, at least 10,000 pairs of wires are thus drawn. Much time and money can be saved in the assembly and installation of cross-connections, by instead drawing the cross-connection wires in parallel, using quick-couplings, for instance of the Molex type, constructing the cross-connection from modules and producing these modules in the factory. When using this method, up to about 67% of the time taken to establish the actual cross-connection can be saved, which is the major part of constructing a cross-connection. The installation time can be reduced to only a few days or a week, which is a fraction of the time earlier required. The installation work is reduced to connecting the cross-connection to the exchange and to the subscriber side by means of quick-couplings. This coupling is effected by means of multipaired cables which are drawn or run in parallel between the cross-connection and the line switch module, LSM, in the exchange. The advantage afforded in this respect lies in the possibility of quickly connecting a station or new lines to the network, and in reducing resourcedemanding installation work, therewith saving time, resources and money, and also in the possibility of receiving revenues more quickly on the new station or on the new lines. The cross-connections are also compact, which saves space (and money).

The drawback with this coupling method is that if a line module is rendered inoperative for some reason or another, all subscribers connected to this line module are also put out of order. A line module will normally include 128 lines, which means that in this case 128 subscribers would be put out of order or disconnected, possibly within one and the same geographical area. The telephone operator would greatly appreciate the opportunity of reducing the risk of geographically neighbouring subscribers being put out of order or disconnected, for instance subscribers within one and the same residential quarter or area, when all of their respective telephones are connected to one and the same line switch module. The telephones are therefore spread out between more than one line module. This can be effected within a cross-connection. The drawbacks with this solution, however, reside in the additional work caused in the cross-connection, among other things. The tendency towards "magpie nesting" in the cross-connection increases and parallel-drawing of wires in the cross-connection is made more difficult.

### DISCLOSURE OF THE INVENTION

The object of the present invention is to eliminate the aforesaid problems and to providing a method of connecting subscribers to a telephone exchange which will minimize the risk of geographically neighbouring subscribers being rendered inoperative simultaneously. This object is achieved by connecting the subscribers to the exchange in the manner defined in the following Claims.

The advantage afforded by the novel inventive method of connecting subscriber lines to the telephone exchange reside in a reduction in the aforesaid risks while enabling the cross-connecting work to be simplified by the possibility of parallel-drawing cross-connection wires, either in the factory or out in the field, and/or enabling the cross-connection paths to be considerably shortened, therewith reducing installation work and also both time and costs.

The invention will now be described in more detail with reference to a preferred exemplifying embodiment thereof and also with reference to the accompanying drawings.

### BRIEF DESCRIPTION OF THE DRAWINGS

Figure 1 is a simplified illustration of the principle according to which wires have been earlier drawn in a cross-connection.

Figure 2 is a simplified illustration of the principle in which wires are drawn in parallel in a cross-connection.

Figure 3 illustrates the connection to the line modules of a telephone exchange by drawing multipaired cables in parallel.

Figure 4 illustrates the novel method of connecting the cross-connection to the line modules in accordance with the invention.

### BEST MODE OF CARRYING OUT THE INVENTION

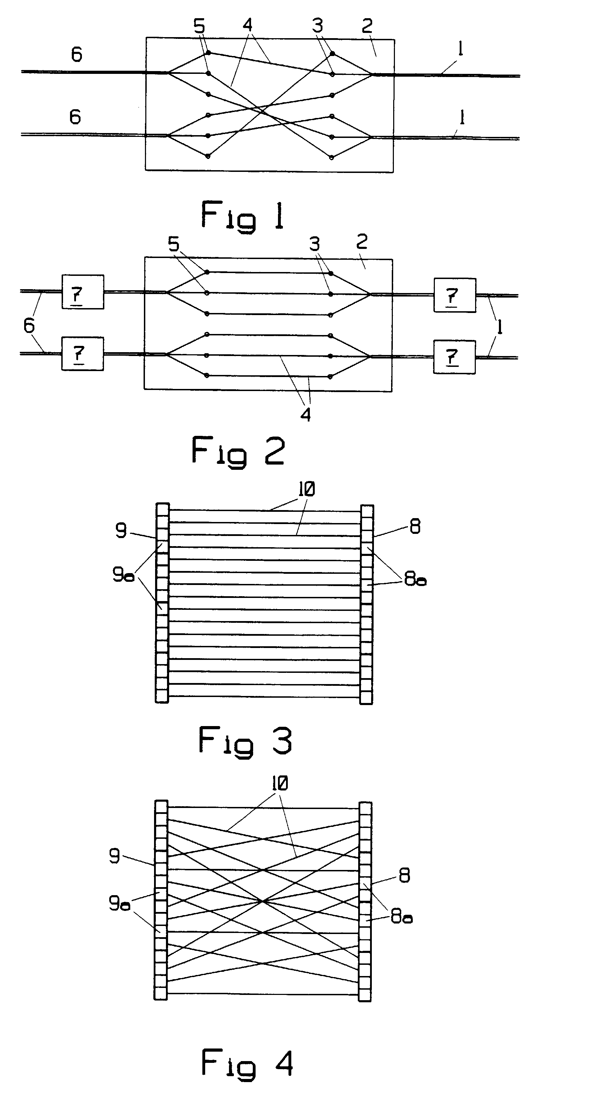

Figure 1 is a greatly simplified illustration of how the cables or wires were earlier drawn in a cross-connection. The paired cables arriving from the subscribers are referenced 1, while the actual cross-connection is referenced 2. The paired cables are distributed in the cross-connection to the various connecting points 3, which are connected by jumperwires 4 to corresponding points 5 for the cables 6 outgoing to the line modules of the telephone exchange. As will be seen, a "magpie nest" is easily formed by the jumperwires, even with the few subscribers illustrated in this simplified case. This impairs the overview of the cross-connection and makes any necessary re-connections or switches more difficult to effect. The cabling or wiring can be more easily seen when running the cross-connection wires in parallel instead, in the manner shown in Figure 2, and the wires may be drawn or run beneficially in the factory, which affords significant advantages as before mentioned. The cross-connection is connected to the telephone exchange and to the subscribers on the station side and the subscriber side respectively, preferably with the aid of quick-couplings 7, for instance of the Molex type.

The cross-connection is built-up of modules 8 corresponding to the line switching modules 9 of the telephone exchange. The line switching modules 9 are in turn divided into a number of subscriber groups 9a. The line switch module has a standard size of 128 lines, which can be divided, for instance, into four groups each containing 32 lines. A corresponding division of the cross-connection into sub-modules 8a is preferably effected, so that each sub-module 8a will correspond to a connection to 32 subscribers. The connection of the cross-connection and the line switch module is shown in Figure 3, where each sub-module 8a in the cross-connection is connected to respective subscriber groups 9a in the telephone exchange by means of parallel-drawn multipaired cables 10.

The subscribers are normally connected to the cross-connection by 128 paired cables which arrive from the street on the subscriber side, i.e. from geographically neighbouring subscribers, for instance from a residential quarter or the like. These 128 paired cables are then connected together with the submodules in groups of 32 in each sub-module, in an ordered sequence by means of Molex couplings. In this case, when a fault occurs on a line module, there is a risk that all subscribers, i.e. 128 subscribers, connected to this module will be rendered inoperative or disconnected, which can mean that all subscribers in the whole of one area will be disconnected.

In order to reduce the risk of all telephones within one and the same geographical area being rendered inoperative, the subscribers are spread between several line modules. As before mentioned, this can be effected within the cross-connection. The drawbacks with this solution, however, reside in the additional work occasioned in the cross-connection and the subsequent tendency of a so-called magpie-nest conglomeration of the wires in the cross-connection, as shown in Figure 1, therewith rendering an overview of the wires difficult. The advantage obtained with paralleldrawing of wires in the cross-connection is lost and/or the connection paths of the cross-connection wires become longer.

According to the invention, this problem is solved by utilizing the cables between the cross-connection and the telephone exchange. A general spread of incoming subscriber lines to four line modules is obtained by connecting the cables according to Figure 4. As will be seen from the Figure, the first sub-module 8a within each module 8 in the cross-connection is connected to its subscriber group 9a in the first line module, while each second sub-module 8a within respective modules 8 is connected to a respective group 9a in the second line module 9, and so on. This is best achieved with cables 10 having 32 conductor pairs for instance. In this way, there are constructed units which, in this case, consist of 512 subscribers. It should be emphasized that the cables are only connected once. It will be seen from Figure 4 that if a geographical area has more than 32 telephones, it is guaranteed that the telephones will be spread between at least two but not more than four line modules. If the area contains 20-30 telephones, it is highly probable that these telephones will be spread between two line modules. If an area has 128 telephones, it is probable that these telephones will be spread between four line modules. If an area contains only a few telephones (five in number) and extreme demands are placed on their security, it is always possible to rerun the cross-connection wires in the cross-connection. The work entailed, however, is only slight and hence the drawbacks of abstaining from parallel-running of the wires in the cross-connection are weighed against the advantage achieved by the reduced risk of the telephones being rendered inoperative. The aforedescribed telephone-line spreading method provides a "basic insurance" which is not only to the advantage of the residential quarter concerned but also to other geographically neighbouring subscribers, such as villages and town and city quarters.

It will be understood that the aforedescribed and illustrated embodiment is only an example which is intended to show the principle of effecting connection between the cross-connection and the line modules, and that the line modules may have other sizes and may be divided into other groups and that the cross-connection modules and sub-modules may be different to those described. In the case of large telephone exchanges, as distinct to the illustrated small exchange for only 512 subscribers, it is suitable to divide the larger exchange into groups of 512 subscribers or a similar number for instance, where each subscriber group can be connected in the manner illustrated or in some other advantageous manner.

It will therefore be understood that the invention is not restricted to the aforedescribed and illustrated exemplifying embodiment thereof, and that modifications can be made within the scope of the following Claims.

## Claims

1. A method of connecting subscribers to a telephone exchange with the intention of spreading the risk of groups of subscribers being disconnected, wherein incoming subscriber lines (1) are connected to a cross-connection frame (2) which, in turn, is connected on the station side to the different line switch modules (9) of the exchange, each line switch module being divided into a number of subscriber groups (9a), and wherein the cross-connection frame is divided into a number of modules (8) where the size of each module corresponds to a line switch module, **characterized** by connecting the incoming subscriber lines (1) in groups to the modules (8) of the cross-connection frame so that geographically neighbouring subscribers are connected to the same module; dividing the modules (8) of the cross-connection frame into a plurality of sub-modules (8a) which correspond in number to the number of subscriber groups (9a) in each line switch module; dividing the line switch modules (9) and the cross-connection frame modules (8) into units such that the number of modules in each unit will correspond to the number of subscriber groups (9a) and the number of sub-modules (8a) in respective modules; and connecting the cross-connection frame to the line switch modules (9) of the exchange such that the first sub-module (8a) in each cross-connection module (8) is connected to the first line module (9), the second sub-module in each cross-connection module is connected to the second line module, and so on.

2. A method according to Claim 1, **characterized** by connecting the multipaired cables (10) to the line switch modules (9) and to the cross-connection frame modules (8) via multi-pole quick-couplings.

## Patentansprüche

1. Verfahren zum Verbinden von Teilnehmern mit einer Telefonvermittlung mit der Intention, das Risiko, dass Teilnehmergruppen abgetrennt werden, zu streuen, wobei eingehende Teilnehmerleitungen (1) mit einem Querverbindungsrahmen (2) verbunden sind, der wiederum auf der Stationsseite mit unterschiedlichen Leitungsschaltmodulen (9) der Vermittlung verbunden ist, wobei jedes Leitungsschaltmodul in eine Anzahl von Teilnehmergruppen (9a) aufgeteilt ist und worin der Querverbindungsrahmen in eine Anzahl von Module (8) aufgeteilt ist, wobei die Größe von jedem Modul einem Leitungsschaltmodul entspricht, dadurch gekennzeichnet, dass die eingehenden Teilnehmerleitungen (1) in Gruppen mit den Modulen (8) von dem Quervermittlungsrahmen verbunden werden, so dass geographisch benachbarte Teilnehmer mit dem gleichen Modul verbunden sind; Aufteilen der Module (8) des Quervermittlungsrahmens in eine Vielzahl von Untermodule (8a), deren Anzahl der Anzahl von Teilnehmergruppen (9a) in jedem Leitungsschaltmodul entspricht; Aufteilen der Leitungsschaltmodule (9) und der Querverbindungsrahmenmodule (8) in Einheiten dergestalt, dass die Anzahl von Module in jeder Einheit der Anzahl von Teilnehmergruppen (9a) und der Anzahl von Untermodulen (8a) in entsprechenden Modulen entspricht; und Verbinden des Querverbindungsrahmens mit den Leitungsschaltmodulen (9) der Vermittlung dergestalt, dass das erste Untermodul (8a) in jedem Querverbindungsmodul (8) mit dem ersten Leitungsmodul (9) verbunden ist, das zweite Untermodul in jedem Querverbindungsmodul mit dem zweiten Leitungsmodul verbunden ist und so weiter.

2. Verfahren nach Anspruch 1, dadurch gekennzeichnet, dass die hochpaarigen Kabel (10) mit den Leitungsschaltmodulen (9) und mit den Querverbindungsrahmenmodulen (8) über mehrpolige Schnellkopplungen verbunden werden.

## Revendications

1. Procédé de raccordement d'abonnés à un central téléphonique avec l'intention de répartir le risque de déconnecter des groupes d'abonnés, dans lequel des lignes d'abonné entrantes (1) sont connectées à une structure de raccordements transversaux (2) qui, à son tour, est connectée sur le côté station aux différents modules de commutation de lignes (9) du central, chaque module de commutation de lignes étant divisé en un nombre de groupes d'abonnés (9a), et dans lequel la structure de raccordements transversaux est divisée en un nombre de modules (8) où la taille de chaque module correspond à un module de commutation de lignes, caractérisé par un raccordement des lignes d'abonné entrantes (1) en groupes, aux modules (8) de la structure de raccordements transversaux de sorte que des abonnés géographiquement voisins soient connectés au même module; une division des modules (8) de la structure de raccordements transversaux en une pluralité de sous-modules (8a) dont le nombre correspond au nombre de groupes d'abonnés (9a) dans chaque module de commutation de lignes; une division des modules de commutation de lignes (9) et des modules de structure de raccordements transversaux (8) en unités de sorte que le nombre de modules dans chaque unité corresponde au nombre de groupes d'abonnés (9a) et au nombre de sous-modules (8a) dans des modules respectifs; et un raccordement de la structure de raccordements transversaux aux modules de commutation de lignes (9) du central de sorte que le premier sous-module (8a) dans chaque module de raccordement transversal (8) soit connecté au premier module de lignes (9), que le deuxième sous-module dans chaque module de raccordement transversal soit connecté au deuxième module de lignes, et ainsi de suite.

2. Procédé selon la revendication 1, caractérisé par un raccordement des câbles à paires multiples (10) aux modules de commutation de lignes (9) et aux modules de structure de raccordements transversaux (8) par l'intermédiaire de couplages rapides multipolaires.
